# EUROPEAN PATENT APPLICATION

(11) **EP 4 831 953 A1**
(43) Date of publication of application: **28.10.2026**
(21) Application number: 24908072.2
(22) Date of filing: 18.12.2024
(51) Int. Cl.: G08B 31/00, G08B 21/18, G08B 5/22, G08B 3/10, G06Q 50/10, G06F 21/50, G06F 30/20

(54) **SHIP CYBER ATTACK EARLY WARNING SYSTEM AND METHOD**

(30) Priority: 19.12.2023 KR 20230185346
(71) Applicant: Hanwha Ocean Co., Ltd., Geoje-si, Gyeongsangnam-do 53302 (KR); Cytur Inc., Seoul 08511 (KR)
(72) Inventor: KWON, Eun Hyun, Seoul 07204 (KR); YOO, Chuck Keun, Seoul 07032 (KR); JO, Yong Hyun, Seoul 08511 (KR)
(74) Representative: Cabinet Beau de Loménie
(86) International application number: PCT/KR2024/020624
(87) International publication number: WO 2025/135789

(57) **Abstract**

Disclosed herein are a maritime cyberattack early warning system and method which can provide an early warning against maritime cyberattacks through detection of anomalies in association with an alarm, monitoring and control system (AMS) in consideration of a ship control system environment.

## Description

### [Technical Field]

The present invention relates to a maritime cyberattack early warning system and method, which can provide an early warning against maritime cyberattacks through detection of anomalies in association with an alarm, monitoring and control system (AMS) in consideration of a ship control system environment.

### [Background Art]

Generally, when a dangerous situation, such as a fire, flooding, or mechanical failure, occurs in a ship, a marine signal column, a speaker, and the like are used as an alert system of the ship.

A ship collects input/output values to/from field stations through an alarm, monitoring and control system (AMS) to establish a surveillance and monitoring system.

However, typical AMS systems lack features for detecting and monitoring cyberattacks

Therefore, existing cybersecurity equipment for control systems (OT) faces limitations as implementation of a comprehensive threat detection system across all onboard OT frameworks remains a challenging task.

The related art is disclosed in Korean Patent Laid-open Publication No. 10-2017-0110932 (published on October 12, 2017).

### [Disclosure]

### [Technical Problem]

It is one aspect of the present invention to provide a maritime cyberattack early warning system and method, which can detect anomalies and provide warnings in association with an alarm, monitoring and control system (AMS) in consideration of a ship control system environment.

It is another object of the present invention to provide a maritime cyberattack early warning system and method, which generate onboard system anomaly conditions in an onshore crew training environment, perform training based on data on crew's actions and inputs in response to the anomaly conditions, classify a corresponding response measure as a normal measure or an abnormal response measure, and provide an early warning based on the training data regarding crew's actions and inputs upon occurrence of abnormal response measure actions and inputs in the event of an actual cyber incident at sea.

### [Technical Solution]

In accordance with one aspect of the present invention, a maritime cyberattack early warning method includes: a training step in which a learning unit is trained based on data on crew's actions and inputs in response to maritime cyber anomalies; a detection step in which occurrence of an anomaly in onboard equipment is detected by a detection unit configured to operate in association with an alarm, monitoring and control system (AMS); a storage step in which data on the crew's actions and inputs in response to the anomaly detected in the detection step is stored in a storage unit; a simulation step in which the response measure is simulated by a simulation unit based on the data stored in the storage unit; a classification step in which a classification unit classifies the response measure as a normal measure or an abnormal measure by comparing the data on the crew's actions and inputs obtained from the simulation step with the data used in the training step; and an alarm step in which an early warning is generated by an alarm unit configured to operate in association with the alarm, monitoring and control system (AMS) and onboard visual and auditory alarm systems upon determining, in the classification step, that the response measure is an abnormal measure.

The detection step may include detecting occurrence of an anomaly in any one of major equipment in a ship, including an alarm, monitoring and control system anomaly indicator, an automatic identification system (AIS) anomaly indicator, a main engine (M/E) anomaly indicator, a sensor anomaly indicator, an electronic chart display and information system, and a loading computer.

The detection step may include comparing various real-world anomalies with the details of the response measure, checking result values through simulation for an initial response action, and detecting an anomaly at an early stage of the response measure to generate an early warning.

The classification step may include classifying the response measure as a normal measure or an abnormal measure by comparing equipment input values, timestamps, locations, routes, and communication logs associated with measures taken in response to generation of an anomaly signal with the data on the crew's actions and inputs.

In accordance with another aspect of the present invention, a maritime cyberattack early warning system includes: a learning unit configured to be trained based on data on crew's actions and inputs in response to maritime cyber anomalies; a detection unit configured to detect occurrence of an anomaly in onboard equipment in association with an alarm, monitoring and control system (AMS); a storage unit configured to store data on the crew's actions and inputs performed as a response to the anomaly detected by the detection unit; a simulation unit configured to simulate details of a corresponding response measure based on the data stored in the storage unit; a classification unit configured to classify the response measure as a normal measure or an abnormal measure by comparing the data on the crew's actions and inputs obtained from the simulation with the data used by the learning unit; and an alarm unit configured to generate an early warning in association with the alarm, monitoring and control system (AMS) and onboard visual and auditory alarm systems upon determining, by the classification unit, that the response measure is an abnormal measure.

The detection unit may detect occurrence of an anomaly in any one of major equipment in a ship, including an alarm, monitoring and control system (AMS) anomaly indicator, an automatic identification system (AIS) anomaly indicator, a main engine (M/E) anomaly indicator, a sensor anomaly indicator, an electronic chart display and information system, and a loading computer.

The detection unit may compare various real-world anomalies with the details of the response measure, may check result values through simulation for an initial response action, and may detect an anomaly at an early stage of the response measure to generate an early warning.

The classification unit may classify the response measure as a normal measure or an abnormal measure by comparing equipment input values, timestamps, locations, routes, and communication logs associated with measures taken in response to generation of an anomaly signal with the data on the crew's actions and inputs.

### [Advantageous Effects]

Embodiments of the present invention provide a maritime cyberattack early warning system and method, which can detect anomalies and provide warnings in association with an alarm, monitoring and control system (AMS) in consideration of a ship control system environment.

In addition, embodiments of the present invention provide a maritime cyberattack early warning system and method, which generate onboard system anomaly conditions in an onshore crew training environment, perform training based on data on crew's actions and inputs in response to the anomaly conditions, classify a corresponding response measure as a normal measure or an abnormal measure, and provide an early warning based on the training data regarding the crew's actions and inputs upon occurrence of abnormal response measure actions and inputs in the event of an actual cyber incident at sea.

Furthermore, embodiments of the present invention provide a maritime cyberattack early warning system and method, which can overcome limitations in applying security to onboard IT/OT systems, thereby enabling a novel approach for maritime IT/OT security detection.

### [Description of Drawings]

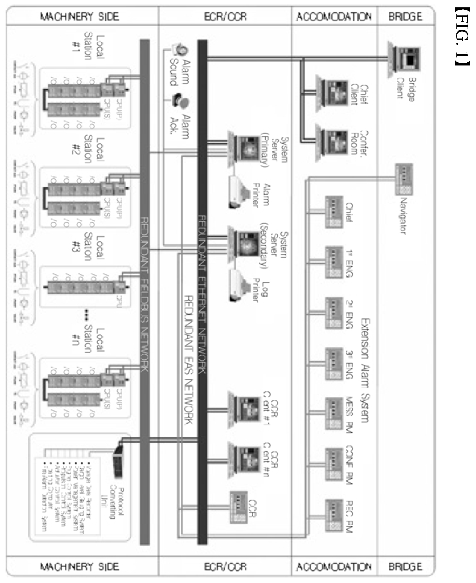

FIG. 1 is a diagram illustrating a typical alarm, monitoring and control system (AMS).
FIG. 2 is a diagram illustrating a configuration of a maritime cyberattack early warning system according to the present invention.
FIG. 3 is a diagram illustrating a training step in a maritime cyberattack early warning method according to the present invention.
FIG. 4 is a flow diagram illustrating the maritime cyberattack early warning method according to the present invention.
FIG. 5 and FIG. 6 are diagrams illustrating a training step for optimizing a detection unit in the maritime cyberattack early warning method according to the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

A ship collects input/output values to/from field stations through an alarm, monitoring and control system (AMS) to establish a surveillance and monitoring system.

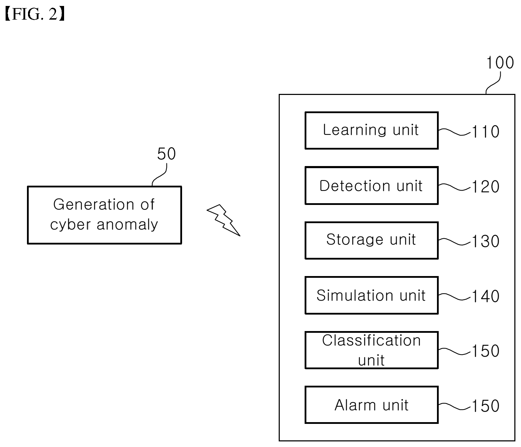

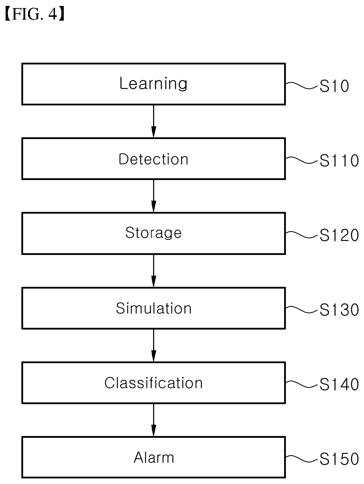

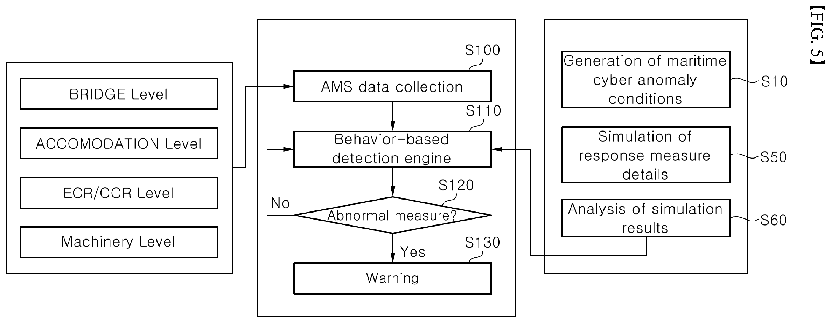

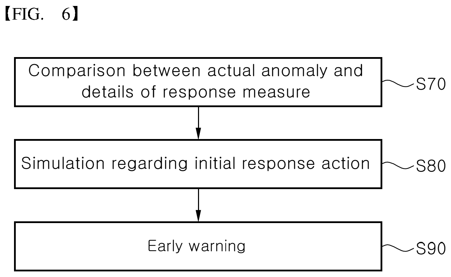

Referring to FIG. 2 to FIG. 6, the present invention relates to a maritime cyberattack early warning system and method, which enable anomaly detection in association with an alarm, monitoring and control system (AMS) in consideration of a ship control system (OT) environment.

More specifically, referring to FIG. 2, the maritime cyberattack early warning system 100 according to the present invention may include a learning unit 110, a detection unit 120, a storage unit 130, a simulation unit 140, a classification unit 150, and an alarm unit 160.

When cyber anomalies 50 are generated outside a ship, such as in an onshore crew training environment, and then transmitted to the ship, the learning unit 110 of the maritime cyberattack early warning system 100 is trained based on data on crew's actions and inputs in response to the cyber anomalies.

In addition, the detection unit 120 may detect occurrence of an anomaly in onboard equipment in association with an alarm, monitoring and control system (AMS).

That is, the detection unit 120 may detect occurrence of an anomaly in any one of major equipment of the ship, including an alarm, monitoring and control system (AMS) anomaly indicator, an automatic identification system (AIS) anomaly indicator, a main engine (M/E) anomaly indicator, a sensor anomaly indicator, an electronic chart display and information system, and a loading computer.

In addition, the storage unit 130 may store data on the crew's actions and inputs as a response measure against the anomaly detected by the detection unit 120.

The simulation unit 140 may simulate details of a corresponding response measure based on the data stored in the storage unit 130.

The classification unit 150 may classify the response measure as a normal measure or an abnormal measure through comparison of the data on the crew's actions and inputs in response to the anomaly with the data used to train the learning unit 110, based on simulation results obtained by the simulation unit 140.

The alarm unit 160 may generate an alarm in association with onboard visual and auditory alarm systems, including the alarm, monitoring and control system (AMS), upon determining, by the classification unit 150, that the response measure is an abnormal measure.

Here, the detection unit 120 may compare various real-world anomalies with the details of the response measure, may check result values through simulation for an initial response action, and may detect an anomaly at an early stage of the response measure to generate an early warning.

In the maritime cyberattack early warning system according to the present invention, the classification unit 150 may classify the response measure as a normal measure or an abnormal measure by checking equipment input values, timestamps, locations, routes, and communication logs associated with measures taken in response to generation of anomaly signals for comparison with the data on the crew's actions and inputs.

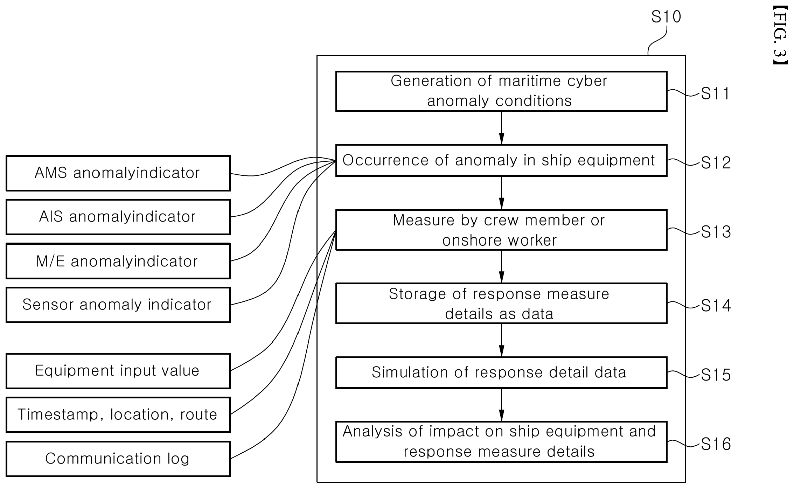

Referring to FIG. 3 to FIG. 6, a maritime cyberattack early warning method according to the present invention may include a training step S10, a detection step S110, a storage step S120, a simulation step S130, a classification step S140, and an alarm step S150.

In the training step S10, a learning unit is trained based on data on crew's actions and inputs in response to maritime cyber anomalies.

More specifically, the training step S10 may include generating maritime cyber anomaly conditions onshore or outside a ship and transmitting the same to the ship S11.

In addition, the training step S10 may include: detecting the occurrence of an anomaly in onboard equipment in association with the alarm, monitoring and control system (AMS) S12, taking a measure in response to the anomaly by a crew member or an onshore operator S13, storing data on their actions and inputs S14 in response to the anomaly, performing simulations based on the data on the response measure S15, and analyzing impact on the onboard equipment and details of the response measure S16.

Accordingly, the method according to the present invention can determine propriety of the response measure against maritime cyber anomalies based on the impact on the onboard equipment.

In the detection step S110, the occurrence of an anomaly in the onboard equipment may be detected by a detection unit configured to operate in associated with the alarm, monitoring and control system (AMS).

In addition, the detection step S110 may include: updating the data used in the training step through comparison of various real-world anomalies with the details of the response measure S70; checking result values through simulation for an initial response action S80; and detecting an anomaly at an early stage of the response measure to generate an early warning S90.

In the storage step S120, data on crew's actions and inputs in response to the anomaly detected in the detection step S110 may be stored in a storage unit.

In the simulation step S130, details of the response measure may be simulated by a simulation unit based on the data stored in the storage unit.

In the classification step S140, the response measure may be determined and classified as a normal measure or an abnormal measure through comparison of the data on the crew's actions and inputs in response to the anomaly with the data used in the training step, based on simulation results obtained in the simulation step S130.

In the alarm step S150, an early warning may be generated by an alarm unit upon determining, in the classification step S140, that the response measure is an abnormal measure.

In addition, the detection step S110 may include: detecting the occurrence of an anomaly in any one of an alarm, monitoring and control system (AMS) anomaly indicator, an automatic identification system (AIS) anomaly indicator, a main engine (M/E) anomaly indicator, and a sensor anomaly indicator; comparing various real-world anomalies with the details of the response measure; checking result values through simulation for an initial response action; and detecting an anomaly at an early stage of the response measure to generate an early warning.

In addition, the classification step S140 may include classifying the response measure as a normal measure or an abnormal measure by comparing equipment input values, timestamps, locations, routes, and communication logs associated with measures taken in response to generation of an anomaly signal with the data on the crew's actions and inputs.

In this way, in the event of an actual cyber incident at sea, an early warning can be generated based on the training data regarding the crew's actions and inputs upon occurrence of abnormal response actions and inputs.

Accordingly, the method according to the present invention enables detection of anomalies and generation of warnings in association with the alarm, monitoring and control system (AMS) in consideration of a ship control system environment.

In addition, the method according to the present invention generates onboard system anomaly conditions in an onshore crew training environment, performs training based on data on crew's corresponding actions and inputs, classifies a corresponding response measure as a normal measure or an abnormal measure, and generates an early warning based on the training data regarding the crew's actions and inputs upon occurrence of abnormal response actions and inputs in the event of an actual cyber incident at sea.

Furthermore, the method according to the present invention can overcome limitations in applying security to onboard information technology (IT)/operational technology (OT) systems, thereby providing a novel approach for maritime IT/OT security detection.

Embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROM; RAM; and flash memory. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the present invention.

### [List of reference numerals]

50: Generation of cyber anomaly outside ship
100: Maritime cyberattack early warning system
110: Learning unit
120: Detection unit
130: Storage unit
140: Simulation unit
150: Classification unit
160: Alarm unit

## Claims

1. A maritime cyberattack early warning method comprising:
a training step in which a learning unit is trained based on data on crew's actions and inputs in response to maritime cyber anomalies;
a detection step in which occurrence of an anomaly in onboard equipment is detected by a detection unit configured to operate in association with an alarm, monitoring and control system (AMS);
a storage step in which data on the crew's actions and inputs in response to the anomaly detected in the detection step is stored in a storage unit;
a simulation step in which the response measure is simulated by a simulation unit based on the data stored in the storage unit;
a classification step in which a classification unit classifies the response measure as a normal measure or an abnormal measure by comparing the data on the crew's actions and inputs obtained from the simulation step with the data used in the training step; and
an alarm step in which an early warning is generated by an alarm unit configured to operate in association with the alarm, monitoring and control system (AMS) and onboard visual and auditory alarm systems upon determining, in the classification step, that the response measure is an abnormal measure.

2. The maritime cyberattack early warning method according to claim 1, wherein the detection step comprises detecting occurrence of an anomaly in any one of major equipment in a ship, including an alarm, monitoring and control system (AMS) anomaly indicator, an automatic identification system (AIS) anomaly indicator, a main engine (M/E) anomaly indicator, a sensor anomaly indicator, an electronic chart display and information system, and a loading computer.

3. The maritime cyberattack early warning method according to claim 1, wherein the detection step comprises comparing various real-world anomalies with the details of the response measure, checking result values through simulation for an initial response action, and detecting an anomaly at an early stage of the response measure to generate an early warning.

4. The maritime cyberattack early warning method according to claim 1, wherein the classification step comprises classifying the response measure as a normal measure or an abnormal measure by comparing equipment input values, timestamps, locations, routes, and communication logs associated with measures taken in response to generation of an anomaly signal with the data on the crew's actions and inputs.

5. A maritime cyberattack early warning system comprising:
a learning unit configured to be trained based on data on crew's actions and inputs in response to maritime cyber anomalies;
a detection unit configured to detect occurrence of an anomaly in onboard equipment in association with an alarm, monitoring and control system (AMS);
a storage unit configured to store data on the crew's actions and inputs performed as a response to the anomaly detected by the detection unit;
a simulation unit configured to simulate details of a corresponding response measure based on the data stored in the storage unit;
a classification unit configured to classify the response measure as a normal measure or an abnormal measure by comparing the data on the crew's actions and inputs obtained from the simulation with the data used by the learning unit; and
an alarm unit configured to generate an early warning in association with the alarm, monitoring and control system (AMS) and onboard visual and auditory alarm systems upon determining, by the classification unit, that the response measure is an abnormal measure.

6. The maritime cyberattack early warning system according to claim 5, wherein the detection unit detects occurrence of an anomaly in any one of major equipment in a ship, including an alarm, monitoring and control system (AMS) anomaly indicator, an automatic identification system (AIS) anomaly indicator, a main engine (M/E) anomaly indicator, a sensor anomaly indicator, an electronic chart display and information system, and a loading computer.

7. The maritime cyberattack early warning system according to claim 5, wherein the detection unit compares various real-world anomalies with the details of the response measure, checks result values through simulation for an initial response action, and detects an anomaly at an early stage of the response measure to generate an early warning.

8. The maritime cyberattack early warning system according to claim 5, wherein the classification unit classifies the response measure as a normal measure or an abnormal measure by comparing equipment input values, timestamps, locations, routes, and communication logs associated with measures taken in response to generation of an anomaly signal with the data on the crew's actions and inputs.
